## Europäisches Patentamt
## European Patent Office
## Office européen des brevets

(19)

(11) Numéro de publication:

# 0 010 561
## A1

(12)

# DEMANDE DE BREVET EUROPEEN

(21) Numéro de dépôt: 78400134.9

(22) Date de dépôt: 12.10.78

(51) Int. Cl.³: **F 41 B 9/00**, F 04 B 21/04, F 16 J 1/04

(43) Date de publication de la demande: **14.05.80**
**Bulletin 80/10**

(84) Etats contractants désignés: **BE CH DE FR GB LU NL SE**

(71) Demandeur: **ETABLISSEMENTS DESSOY ET FILS S.A., F-39260 MOIRANS-EN-MONTAGNE (FR)**

(72) Inventeur: **ETABLISSEMENTS DESSOY ET FILS S.A., F-39260 MOIRANS-EN-MONTAGNE (FR)**

(54) **Pistolet à eau.**

(57) Pistolet à eau comportant deux éléments cylindriques téléscopiques, le premier (2) fonctionnant comme cylindre et le deuxième (4) comme piston, l'étanchéité étant garantie par des cannelures (4d) et des éléments (5, 6) en matière souple, montés sur ledit piston (4).

EP 0 010 561 A1

TITRE MODIFIÉ
voir page de garde

1

# D E S C R I P T I O N

### JEUX ET JOUETS POUR ENFANTS

La présente invention concerne le secteur des jeux et jouets pour enfants et plus particulièrement, bien que non exclusivement, ceux dits récréatifs, c'est à dire destinés aux enfants afin de leur permettre de développer leurs facultés ludiques.

Suivant l'invention, on procède à l'immersion de l'embout de l'A-QUA TIR dans l'eau et, en faisant le vide dans le cylindre par maniement dans le sens avant-arrière, on procède à la montée du liquide dans le cylindre.L'étanchéité est assurée par deux joints souples faisant office de segments et opérant par dilatation, rendus solidaires sur le piston par la présence d'un écrou avec pas dé vis sur ledit piston et placés en opposition.

Un piston cannelé assure l'étanchéité (dans le mouvement arrière-avant) dans le cylindre et propulse l'eau aspirée précédemment vers l'avant, proportionnellement à la pression appliquée à l'embout du piston par l'intermédiaire de la crosse fixée sur le cylindre et au diamètre du fût du canon afin d'assurer un jet continu à une distance qui est la résultante de la pression appliquée à la culasse du piston combiné au diamètre réduit du gicleur. Les deux segments opèrent par dilatation dans le mouvement arrière-avant afin d'assurer une étanchéité totale.

Les dessins annexés, donnés à titre d'exemple, permettront de mieux comprendre l'invention, les caractéristiques qu'elle présente, et les avantages qu'elle est susceptible de procurer.

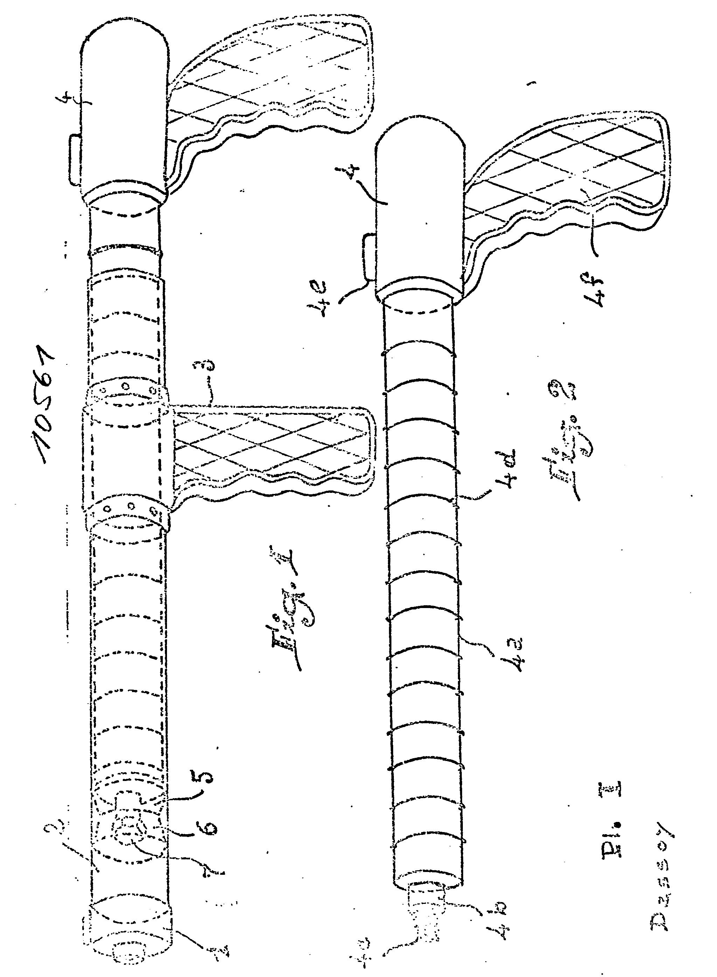

En figure 1, on montre une vue globale de l'invention et les différents éléments qui permettent la réalisation du jeu.

En figure 2, on a illustré le piston et le principe d'étanchéité.

La figure 3 représente le cylindre.

La figure 4 montre la crosse et le principe de serrage de celle-ci autour du cylindre.

La figure 5 illustre l'embout du pistolet et le gicleur.

La figure 6 représente les joints souples, placés en opposition et la figure 7, l'écrou de fixation.

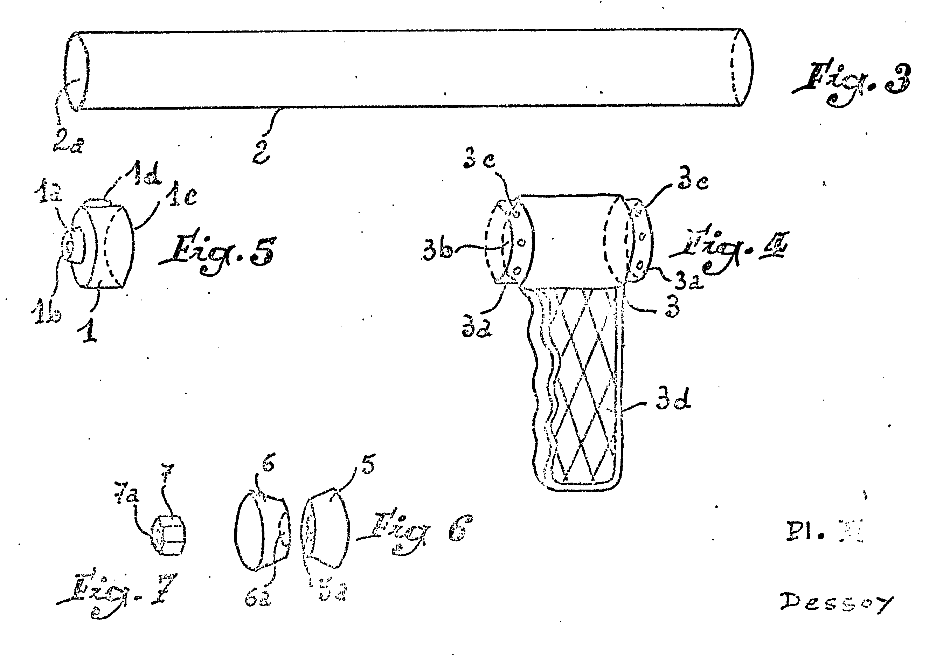

Les éléments 4 des figures 1 et 2 et 2 de la figure 3 sont prévus tubulaires et présentent en profil en plan des formes circulaires. Chacun de ces éléments est réalisé en une matière plastique rigide, sa conformation étant effectuée par un moule de soufflage. L'élément 4 d de la figure 2 illustre le principe d'étanchéité réalisé par l'apport de cannelures. Les éléments 4 b et 4 c de la figure 2 représentent l'emplacement des éléments 5 et 6 de la figure 6, maintenus en place par la participation de l'élément 7 de la figure 7.

Chacun des éléments de la figure 6 (éléments 5 et 6) est réalisé en une matière plastique souple et résistante, opérant par dilatation lors du frottement et contact piston-cylindre, assurant par là une aspiration et un refoulement maximum. Les éléments 6 a et 5 a de la figure 6 montrent l'emplacement dans lequel vient s'intercaler l'élément 4 c de la figure 2 tandis que la présence de l'élément 7 de la figure 7 rend solidaire ces éléments tels qu'ils sont en figure 1. L'élément 1 de la figure 5 termine l'invention et lui permet de fonctionner par la présence d'un gicleur (élément 1 a) et du diamètre de ce gicleur, (élément 1 b). Le diamètre du trou du gicleur , élément 1 b figure 5, s'inscrit dans le rapport 1/10 compte tenu du diamètre intérieur du réservoir (40 mm) et du gicleur (4 mm), de manière à assurer, compte tenu de la pression appliquée à l'élément 4 de la figure 2, une propulsion effective du liquide.

Les éléments 4 f de la figure 2 et 3 de la figure 1 permettent une bonne prise en main de l'invention. On trouvera en figure 4 le détail de serrage de l'élément 3 de la figure 1 autour de l'élément 2 de la figure 3, par l'intermédiaire des éléments 3 c, bossages en creux, solidaires des éléments 3 a, collier de serrage.

Il doit être entendu que la description telle qu'elle est donnée de l'invention lui permet de fonctionner parfaitement, de manière à pouvoir prendre place dans la catégorie des jeux récréatifs.

REVENDICATIONS

Jeu récréatif dit AQUA-TIR, caractérisé

- en ce qu'il comprend plusieurs éléments tubulaires et circulaires en plan, constitués en une matière plastique rigide, pourvus chacun de moyens d'assemblage, afin de les rendre propres à coopérer ensemble.

- en ce que l'élément 4 a de la figure 2 appelé piston, circule librement à l'intérieur de l'élément 2 de la figure 3, appelé cylindre, élément sur lequel vient se fixer par collier de serrage l'élément 3 de la figure 4, appelé poignée et l'élément 4 f de la figure 2 appelé crosse,

- en ce que l'étanchéité, sans laquelle le jeu ne fonctionnerait pas de manière satisfaisante, est assurée par une matière plastique souple, résistante et opérant par dilatation, éléments 5 et 6 de la figure 6 en contact avec le cylindre, matière plastique dure, élément 2 de la figure 3 et par les cannelures en relief, élément 4 d de la figure 2 sur l'élément 4 a, même figure, afin d'assurer un fonctionnement correct lors du mouvement avant-arrière, aspiration, et arrière-avant refoulement, et procurer au liquide par l'intermédiaire du gicleur, élément 1 de la figure 5, une portée satisfaisante.

10561

Fig. 1

Fig. 2

Pl. I

Dassoy

0010561

*Fig. 3*

*Fig. 5*

*Fig. 4*

*Fig. 6*

*Fig. 7*

Pl. II

Dessoy

0010561

0010561

Office européen des brevets

**RAPPORT DE RECHERCHE EUROPEENNE**

Numéro de la demande

EP 78 40 0134

| Catégorie | Citation du document avec indication, en cas de besoin, des parties pertinentes | Revendication concernée |
|---|---|---|
| | FR - A - 1 275 037 (VANOTTI)  * En entier * | reven-dica-tion |
| A | FR - A - 1 065 001 (MAREP) | |
| A | FR - E - 81 347 (LE JOINT FRANCAIS) | |
| A | US - A - 2 538 467 (MILLER) | |
| A | FR - A - 1 242 737 (EVERETT) | |
| A | FR - A - 957 829 (FREEMAN) | |

**DOCUMENTS CONSIDERES COMME PERTINENTS**

**CLASSEMENT DE LA DEMANDE (Int. Cl.²)**

F 41 B 9/00
F 04 B 21/04
F 16 J 1/04

**DOMAINES TECHNIQUES RECHERCHES (Int. Cl.²)**

F 41 B
F 04 B
F 16 J

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 30-05-1979 | VAN DER PLAS |

OEB Form 1503.1  06.78